(19) Europäisches Patentamt

European Patent Office

Office européen des brevets

(11) **EP 1 162 182 A1**

(12) **EUROPEAN PATENT APPLICATION**
published in accordance with Art. 158(3) EPC

(43) Date of publication:
**12.12.2001 Bulletin 2001/50**

(21) Application number: **00902123.9**

(22) Date of filing: **07.02.2000**

(51) Int Cl.[7]: **C04B 28/02**, C04B 20/00,
C04B 14/06, C04B 24/16,
C04B 14/30, C04B 24/00,
C04B 24/08
// (C04B103/65, 103:67,
111:27)

(86) International application number:
**PCT/JP00/00657**

(87) International publication number:
**WO 00/46165 (10.08.2000 Gazette 2000/32)**

(84) Designated Contracting States:
**AT BE CH CY DE DK ES FI FR GB GR IE IT LI LU
MC NL PT SE**
Designated Extension States:
**AL LT LV MK RO SI**

(30) Priority: **05.02.1999 JP 2929299
04.11.1999 JP 31436999**

(71) Applicant: **TOTO LTD.
Kitakyushu-shi, Fukuoka-ken 802-8601 (JP)**

(72) Inventors:
• **TAHARA, Shinichi, Toto Ltd
Kitakyushu-shi, Fukuoka 802-8601 (JP)**

• **AKIMOTO, Jiro, Toto Ltd
Kitakyushu-shi, Fukuoka 802-8601 (JP)**
• **KOBAYASHI, Hideki, Toto Ltd
Kitakyushu-shi, Fukuoka 802-8601 (JP)**
• **FUJII, Hiroyuki, Toto Ltd
Kitakyushu-shi, Fukuoka 802-8601 (JP)**

(74) Representative: **Grünecker, Kinkeldey,
Stockmair & Schwanhäusser Anwaltssozietät
Maximilianstrasse 58
80538 München (DE)**

(54) **CEMENT-BASED JOINT BODY AND JOINT MATERIAL THEREFOR**

(57) Disclosed is a cement-based joint body having excellent antifouling activity, such as excellent antimicrobial, fungicidal, or antialgal activity. This cement-based joint body comprises a hydraulic material, a particulate aggregate having a particle diameter of not more than 10 µm, and an antimicrobial/fungicidal agent and/ or a photocatalytic metal oxide and has a water absorption of not more than 10%. The cement-based joint body has improved antifouling activity, such as improved antimicrobial, fungicidal, or antialgal activity and, in addition, can maintain the antifouling activity for a long period of time.

EP 1 162 182 A1

**Description**

[BACKGROUND OF THE INVENTION]

Field of the Invention

The present invention relates to a cement-based joint body having excellent antifouling activity, such as excellent antimicrobial activity, fungicidal activity or antialgal activity, and a joint filler for said joint body.

Background Art

A cement-based joint filler which is used for filling a gap (the so-called "joint portion") provided between tiles generally contains portland cement as a binder and an aggregate, such as silica sand or calcium carbonate. This cement-based joint filler is hardened with hydration of the portland cement to form a cement-based joint body. Although this joint portion is desirably clean after formed, the joint portion is soiled with the elapse of time. The cause of this is mainly considered as follows. A large volume of pores formed during hardening remains within the joint body, and various inclusions are likely to be deposited in the pores. In particular, when the inclusions are organic matter, it may be a nutrient for fungi and pathogenic bacteria derived from the air and, thus, they are likely to grow. Further, in the case of use in an outdoor environment, algae are also likely to grow. The joint portion should be therefore frequently cleaned to keep the joint portion clean.
Under these circumstances, several proposals have been made on cement-based materials having excellent antimicrobial activity and fungicidal activity or treatment method thereof.
Japanese Patent Laid-Open No. 321600/1994 describes a fungicidal agent-containing cement-based material.
Japanese Patent Laid-Open No. 158418/1999 describes a method for the fungicidal treatment of a tile joint, wherein a fungicidal treating agent comprising an aqueous penetrable waterproof agent, prepared by aqueous emulsification of a water-repellent alkylalkoxysilane, and a fungicidal agent incorporated therein is coated on a tile joint after hardening.
Japanese Patent Laid-Open No. 36157/1998 describes a technique wherein a cement admixture comprising a specific organosilicon component and an emulsifier having an HLB value of 20 to 30 is used to maintain water repellency and waterproof properties for a long period of time and consequently to enhance endurance properties.

[SUMMARY OF THE INVENTION]

The present inventors have now found that, in a cement-based joint body comprising an antimicrobial/fungicidal agent and/or a photocatalytic metal oxide, soiling of the joint portion can be effectively prevented by regulating the particle diameter of the aggregate and the water absorption after hardening. The present invention has been made based on such finding.
Accordingly, it is an object of the present invention to provide a cement-based joint body, which has excellent antifouling activity, such as antimicrobial, fungicidal, or antialgal activity and, in addition, can maintain the antifouling activity for a long period of time, and a joint filler for the cement-based joint body.
According to one aspect of the present invention, there is provided a cement-based joint body comprising a hydraulic material, a particulate aggregate having a particle diameter of not more than 10 µm, and an antimicrobial/fungicidal agent and/or a photocatalytic metal oxide, wherein said cement-based joint body has a water absorption of not more than 10%.
According to another aspect of the present invention, there is provided a cement-based joint filler for the production of said joint body, comprising a hydraulic material, a particulate aggregate having a particle diameter of not more than 10 µm, and an antimicrobial/fungicidal agent and/or a photocatalytic metal oxide, and having a water absorption, after hardening, of not more than 10%.

[BRIEF DESCRIPTION OF THE DRAWING]

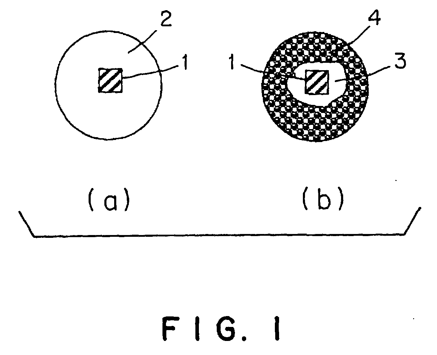

Fig. 1 is a diagram showing a test on resistance to fungi of the joint body according to the present invention, wherein (a) shows the state of the joint body before cultivation of test fungi and (b) the state of the joint body after cultivation of test fungi. In the drawing, numeral 1 designates a joint body, numeral 2 an agar medium, numeral 3 an aseptic portion (inhibited zone), and numeral 4 a fungi propagated portion.

[DETAILED DESCRIPTION OF THE INVENTION]

Definition

In the present invention, the term "joint body" means a hardened product which has been filled into between plates of plate building materials, such as tiles, large earthenware plates, or stone materials, and is exposed on the surface thereof. The term "joint filler" means a material, before hardening, which fills a gap between plates of plate building materials, such as tiles, large earthenware plates, or stone materials, to form a joint body.

In the present invention, the term "water absorption" refers to a value determined by a method wherein a joint body after hardening is satisfactorily dried (for example, for 48 hr), the dried joint body is immersed in water, and, when the water absorption is substantially saturated (for example, after 48 hr), calculation is made according to the following equation:

$$\text{Water absorption (\%)} = (W_1 - W_0)/W_0 \times 100$$

wherein $W_0$: mass before immersion, g, and $W_1$: mass after immersion, g.

The water absorption is preferably measured according to JIS A 6203 (1996). This JIS, together with English translation thereof, is easily available from Japanese Industrial Standards (1-24, Akasaka 4-chome, Minato-ku Tokyo, Japan). Further, the method is described in detail in the working examples below.

Cement-based joint body and joint filler for cement-based joint body

The cement-based joint body according to the present invention comprises a hydraulic material, a particulate aggregate having a particle diameter of not more than 10 μm, and an antimicrobial/fungicidal agent and/or a photocatalytic metal oxide. Further, according to the present invention, the water absorption of the joint body is brought to a very low value such as not more than 10%.

The antifouling activity of the joint body according to the present invention is attainable from the following functions.

a) The deposition and adsorption of bacteria, fungi, and algae per se on a portion within the joint body can be prevented.
b) The absorption of organic soil in water, which serves as a nutrient for bacteria, fungi, and algae, into the joint body can be prevented.
c) The component with antifouling activity is gradually eluted from the joint body by water, and this permits the antifouling activity for a long period of time.

That is, according to the present invention, the functions a) to c) are synergistically exhibited to provide an effect such that the antifouling activity, such as antimicrobial activity, fungicidal activity, or antialgal activity, is excellent and, at the same time, this antifouling activity can persist for a long period of time.

According to a preferred embodiment of the present invention, the water absorption of the joint body is not more than 5%, more preferably 1.7 to 5%, most preferably 1.7 to 3%. When the water absorption is in this range, the functions a) to c) become more significant, contributing to further improved antifouling activity.

According to the present invention, the low water absorption is mainly realized by adding a particulate aggregate having a particle diameter of not more than 10 μm to the hydraulic material to densify the structure. Further, according to a preferred embodiment of the present invention, lower water absorption can be easily ensured by adding the above particulate aggregate and, in addition, a water repellent to the hydraulic material.

The components of the joint body according to the present invention will be described. These components as such are identical to the components of the joint filler according to the present invention.

(a) Hydraulic material

The hydraulic material used in the present invention includes those commonly used as a cement-based powder. Examples of preferred hydraulic materials include portland cement, such as normal portland cement, and other various types of cement, such as alumina cement, fly ash cement, and silica cement.

According to a preferred embodiment of the present invention, the total amount of the hydraulic material is not less than 20% by weight, more preferably 30 to 50% by weight, based on the whole cement-based joint filler, from the viewpoint of maintaining the strength of the joint base material.

(b) <u>Aggregate</u>

Particulate aggregates having a particle diameter of not more than 10 μm, that is, particulate aggregates without particles having a size exceeding 10 μm, are used as the aggregate according to the present invention. The incorporation of the particulate aggregate can enhance the filling level of the joint body to improve the denseness of the joint body structure and thus to lower the water absorption of the joint body. It is considered that, by virtue of the low water absorption which can be realized in this way, the functions a) to c) are synergistically exhibited and the excellent antifouling activity can be exhibited for a long period of time.

The particulate aggregate according to the present invention is not particularly limited so far as the particle diameter of the aggregate is not more than 10 μm. Examples of preferred particulate aggregates include various aggregates, such as silica stone powder, aluminum hydroxide, silica powder, calcium carbonate, volcanic ash, silica fume, mica, diatomaceous earth, and synthetic resin powder.

According to a preferred embodiment of the present invention, the particle diameter of the particulate aggregate is not more than 5 μm. This can further improve the denseness of the joint body and can further lower the water absorption, whereby the antifouling activity can be further improved.

According to a preferred embodiment of the present invention, the total amount of the particulate aggregate is 1 to 70% by weight, more preferably 5 to 40% by weight.

According to a preferred embodiment of the present invention, the cement-based joint filler according to the present invention may further contain a coarse aggregate having a particle diameter of not less than 10 μm. This can prevent, for example, cracking of the joint caused by shrinkage on drying and thus can advantageously ensure the strength of the joint. Coarse aggregates commonly incorporated into joint fillers may be used as the coarse aggregate without particular limitation. Examples of coarse aggregates include silica sand, aluminum hydroxide, calcium carbonate, volcanic ash, silica fume, mica, and diatomaceous earth.

According to a more preferred embodiment of the present invention, the content of the coarse aggregate is not more than 60% by weight, still more preferably about 10 to 40% by weight, based on the whole cement-based joint filler.

(c) <u>Antimicrobial/fungicidal agent</u>

The antimicrobial/fungicidal agent includes those generally called "antimicrobial agents" or "fungicidal agents." Examples of preferred antimicrobial/fungicidal agents include tepconazole, zinc 2-pyridinethiol-1-oxide, 2,4,4'-trichloro-2'-hydroxydiphenyl ether, and 10,10'-oxybisphenoxyarsine. Among them, tepconazole and zinc 2-pyridinethiol-1-oxide are more preferred. The combined use of two or more of them is also preferred.

According to a preferred embodiment of the present invention, the total content of the antimicrobial/ fungicidal agent is large enough to impart antifouling activity, such as antimicrobial activity, fungicidal activity, or antialgal activity, to the joint body. Specifically, the total content of the antimicrobial/ fungicidal agent is preferably about 0.01 to 5.0% by weight, more preferably about 0.1 to 1.0% by weight, based on the whole cement-based joint filler.

(d) <u>Photocatalytic metal oxide</u>

Examples of preferred photocatalytic metal oxides include titanium oxide, zinc oxide, and tin oxide. Among them, titanium oxide is preferred because titanium oxide is highly photocatalytically active, inexpensive, and easily available. More preferred are, for example, powders and sols of $TiO_2$ having an anatase crystal structure. In particular, fine powders are more preferred from the viewpoints of improved specific surface area and increased probability of the presence of the photocatalyst on the surface of the joint.

According to a more preferred embodiment of the present invention, the photocatalytic titanium oxide has, supported thereon, ions of at least one metal (preferably 0.01 to 10% by weight) selected from the group consisting of copper, silver, zinc, platinum, iron, and nickel. This can further enhance the antifouling activity. For example, the photocatalytic titanium oxide with the metal supported thereon may be produced as follows. An aqueous solution containing metal ions, such as copper, silver, zinc, platinum, iron, or nickel ions, is first added to the photocatalytic titanium oxide powder and/or sol. The application of light from an ultraviolet lamp to this aqueous solution causes a photoreduction reaction of metal ions to fix the metal onto the surface of the photocatalytic titanium oxide. Thus, photocatalytic titanium oxide with a metal supported thereon is prepared.

According to a preferred embodiment of the present invention, the amount of the photocatalytic titanium oxide is large enough to impart antifouling activity, such as antimicrobial activity, fungicidal activity, or antialgal activity, to the joint body. More specifically, the amount of the photocatalytic titanium oxide is preferably about 0.01 to 10.0% by weight, more preferably about 0.1 to 5.0% by weight, based on the whole cement-based joint filler. When the amount of the photocatalytic titanium oxide is in this range, the antifouling effect can be satisfactorily developed by the photocatalyst without lowering, for example, water absorption and hardening speed of the joint.

### (e) Water repellent

According to a preferred embodiment of the present invention, the joint body may further contain a water repellent. When this water repellent is used in combination with the particulate aggregate, the water absorption of the joint body can be further lowered. As a result, higher antifouling activity can be exhibited for a long period of time. Examples of preferred water repellents include fatty acids; fatty acid salts, such as, calcium salts of fatty acids, magnesium salts of fatty acids, barium salts of fatty acids, sodium salts of fatty acids, potassium salts of fatty acids, and lithium salts of fatty acids; paraffin emulsions; asphalt emulsions; resin emulsions; rubber latexes; water-soluble resins; siliceous compounds; zirconium compounds; and organic silicic acids. Among them, fatty acid salts and paraffin emulsions are more preferred.

According to a preferred embodiment of the present invention, the total amount of the water repellent is about 0.01 to 10.0% by weight, more preferably about 0.3 to 3.0% by weight, based on the whole cement-based joint filler.

### (f) Alkali metal silicate

According to a preferred embodiment of the present invention, the joint body may further contain an alkali metal silicate. This embodiment can prevent efflorescence of the joint body, while making it difficult for contaminants to be deposited onto the surface of the joint. Thus, better appearance of the joint body can be maintained. Examples of preferred alkali metal silicates include sodium silicate, potassium silicate, lithium silicate, and mixtures thereof.

According to a more preferred embodiment of the present invention, the amount, based on 100 parts by weight of the cement powder, of the alkali metal silicate incorporated is 1 to 300 parts by weight in the case of powder and 10 to 500 parts by weight in the case of the aqueous solution, still more preferably 5 to 50 parts by weight in the case of the powder and 10 to 200 parts by weight in the case of the aqueous solution.

### (g) Additive

According to a preferred embodiment of the present invention, if necessary, the cement-based joint body may contain various additives used in conventional cement joints. Examples of such additives include admixtures, waterproofing agents, pigments, water retaining agents, and hardening control agents (hardening accelerators and hardening retarders).

According to a preferred embodiment of the present invention, the content of the additive is not more than 10% by weight, more preferably about 1.0 to 3.0% by weight, based on the whole cement-based joint filler.

### Production process of joint filler and joint body

The joint filler according to the present invention can be produced by properly mixing the above-described various starting materials. In this case, the amount of the particulate aggregate added and the amount of the water repellent added are properly determined so that the water absorption of the joint body after the hardening of the joint is brought to not more than 10%.

The joint filler according to the present invention thus obtained, when applied, is kneaded with water, and the kneaded product is then filled into gaps between plates of tiles or the like. The filled joint filler is cured and hardened to produce the joint body according to the present invention. Although curing conditions are not particularly limited, curing under conditions of temperature 5 to 35°C and humidity 50 to 90% for 2 to 7 days are preferred.

According to another embodiment of the present invention, the production process comprises applying the same joint filler as described just above except for freedom from the antifouling component and/or the water repellent and, in such a wet state that curing of the joint filler has not been completed, coating the antifouling component and/or the water repellent onto the outermost surface of the joint.

### [EXAMPLES]

The present invention will be described in more detail with reference to the following examples, though it is not limited to these examples only.

Examples A1 to A3

(a) Preparation of joint fillers

For each of Examples A1 to A3, starting materials were mixed together at mixing ratio specified in Table 1. Thus, joint fillers were prepared.

(b) Measurement of water absorption

The water absorption was measured according to JIS A 6203 (1996) as follows. Water was added to the joint filler prepared in step (a), followed by kneading to a slump value of $35 \pm 5$ mm as measured according to JIS A 1173. The kneaded product was molded to form a molded product having a size of 40 mm x 40 mm x 160 mm. After molding, the molded product was allowed to stand under conditions of temperature $20 \pm 2°C$ and humidity not less than 80% for 48 hr and was then removed from the mold, followed by curing in water having a temperature of $20 \pm 2°C$ for 5 days and then curing under conditions of temperature $20 \pm 2°C$ and humidity $(60 \pm 10)$% for 21 days. Thus, three joint bodies were prepared. The joint bodies were dried at a temperature of $80 \pm 2°C$ for 48 hr and were then cooled within a desiccator, and the mass of these joint bodies was measured. Next, the joint bodies were immersed in clear water having a temperature of $20 \pm 2°C$, and, after the elapse of 48 hr from the initiation of the immersion, were taken out of the clear water. Each side of these joint bodies was then quickly wiped with a wet cloth, and, immediately after that, the mass of the joint bodies was measured. The water absorption was calculated according to the following equation, and the values for the three joint bodies were averaged. The results are shown in Table 2.

$$W_A = (W_1 - W_0)/W_0 \times 100$$

wherein $W_A$: water absorption, %, $W_0$: mass after drying, g, and $W_1$: mass after absorption of water, g.

(c) Evaluation of antimicrobial/fungicidal activity

Water was added to each joint filler prepared in step (a), and the mixtures were kneaded to a substantial hardness level of an ear lobe. The kneaded products were molded into molded products having a size of 2.5 cm x 2.5 cm square and a thickness of 2 mm. After molding, the molded products were cured under conditions of temperature 20°C and humidity 65% for 14 days. Thus, joint bodies 1 were prepared. For the joint bodies 1, the antimicrobial/ fungicidal activities were evaluated before running water treatment (initial stage) and after running water treatment.

(i) Initial antimicrobial/fungicidal activities

For the joint bodies 1 thus obtained, the initial antimicrobial/fungicidal activities were evaluated as follows. At the outset, these joint bodies 1 were stored in a carbon dioxide incubator for 148 hr, and were adjusted to pH 7.0 to 8.9. Next, as shown in Fig. 1(a), the joint bodies 1 after pH adjustment were placed at the center of a petri dish with a diameter of 90 mm, and an agar medium 2 containing 25 ml of potato dextrose was added to the Schale and solidified. Next, 0.1 ml of a spore suspension for each test bacterium or fungus specified in Table 2 ($1.0 \times 10^6$/ml) was coated on the solidified agar medium 2, followed by cultivation at 28°C for 7 days.
The state of the joint bodies after the cultivation for 7 days within the petri dish is schematically shown in Fig. 1(b). As shown in Fig. 1(b), the propagation of fungi was not observed in the joint body 1 and the aseptic portion (inhibited zone) 3 around the joint body 1 in the agar medium 2. On the other hand, a fungi propagated portion 4 was observed in the agar medium 2 in its portion other than the joint body 1 and the aseptic portion (inhibited zone) 3. For each test piece and each test bacterium or fungus, the aseptic portion (inhibited zone) 3 and the fungi propagated portion 4 were visually inspected, and the inhibition level of growth of the strain in the joint body 1 was evaluated according to the following criteria (four grades): "+++" not grown, "++" inhibited zone observed, "+" grown to the peripheral portion of the test piece, and "-" grown also on the test piece. The results are shown in Table 2. (ii) Antimicrobial/ fungicidal activities after running water treatment
To evaluate the antimicrobial/fungicidal activities after running water treatment, the joint bodies 1 after the pH adjustment were allowed to stand under running water (water temperature 43°C) at a flow rate of 16 ml/min·cm$^2$ for 1500 hr to accelerate the elution of the antimicrobial/fungicidal agent, and were then taken out of the running water. For the joint bodies 1 after the running water treatment, in the same manner as in the test i), the cultivation of each test bacterium and each test fungus was carried out to evaluate the propagation of the bacteria and fungi.

Comparative Examples A1 and A2

The preparation of joint bodies, the measurement of water absorption, and the evaluation of antimicrobial activity/fungicidal activity were carried out in the same manner as in Examples A1 to A3, except that, as specified in Table 1, the particulate aggregate and the water repellent were not used in the mixing. The results are shown in Table 2.

Table 1

|  | Ex. A1 | Ex. A2 | Ex. A3 | Comp. Ex. A1 | Comp. Ex. A2 |
|---|---|---|---|---|---|
| Mixing ratio |  |  |  |  |  |
|   Portland cement | 50 | 50 | 50 | 50 | 50 |
|   Silica stone powder (size: not more than 5 μm) | 10 | 10 | 10 |  |  |
|   Silica sand No. 7 | 20 | 20 | 20 | 20 | 20 |
|   Calcium carbonate | 17.3 | 17.3 | 17.8 | 27.8 | 28.3 |
|   Water retaining agent | 0.2 | 0.2 | 0.2 | 0.2 | 0.2 |
|   Admixture | 1.0 | 1.0 | 1.0 | 1.0 | 1.0 |
|   Tepconazole | 0.5 | 0.5 | 0.5 | 0.5 | - |
|   Zinc 2-pyridinethiol-1-oxide | 0.5 | 0.5 | - | 0.5 |  |
|   Thiopentazole | - | - | - | - | 0.5 |
|   Paraffin emulsion | 0.5 | - | - | - | - |
|   Calcium stearate | - | 0.5 | 0.5 | - | - |
| Total | 100 | 100 | 100 | 100 | 100 |

Table 2

|  | Ex. A1 | Ex. A2 | Ex. A3 | Comp. Ex. A1 | Comp. Ex. A2 |
|---|---|---|---|---|---|
| Water absorption, % | 4.7 | 4.4 | 4.8 | 22.6 | 23.0 |
| Initial antimicrobial/fungicidal activities |  |  |  |  |  |
| Fungicidal activity |  |  |  |  |  |
|   Cladosporium TOF-91 | +++ | +++ | ++ | +++ | + |
|   Phoma TOF-162 | +++ | +++ | ++ | +++ | - |
|   Alternaria TOF-46 | ++ | ++ | ++ | ++ | + |
|   Aureobasidium TOF-677 | +++ | +++ | ++ | +++ | + |
|   Ulocladium TOF-150 | +++ | +++ | ++ | +++ | + |
|   Penicillium TOF-686 | +++ | +++ | ++ | +++ | + |
|   Aspergillus TOF-558 | +++ | +++ | ++ | +++ | + |
|   Trichoderma TOF-155 | ++ | ++ | + | ++ | - |
| Antimicrobial activity |  |  |  |  |  |
|   P. aeruginosa IFO-13736 | +++ | +++ | + | +++ | - |
|   E. coli IFO-15034 | +++ | +++ | + | +++ | - |
|   S. aureus IFO-13276 | +++ | +++ | + | +++ | - |

Table 2   (continued)

| | Ex. A1 | Ex. A2 | Ex. A3 | Comp. Ex. A1 | Comp. Ex. A2 |
|---|---|---|---|---|---|
| Antimicrobial/fungicidal activities after running water treatment | | | | | |
| Fungicidal activity | | | | | |
| Cladosporium TOF-91 | ++ | ++ | + | - | - |
| Phoma TOF-162 | + | ++ | + | - | - |
| Alternaria TOF-46 | + | ++ | + | - | - |
| Aureobasidium TOF-677 | + | ++ | + | - | - |
| Ulocladium TOF-150 | ++ | ++ | + | - | - |
| Penicillium TOF-686 | ++ | ++ | + | - | - |
| Aspergillus TOF-558 | ++ | ++ | + | - | - |
| Trichoderma TOF-155 | + | + | + | - | - |
| Antimicrobial activity | | | | | |
| P. aeruginosa IFO-13736 | + | + | - | | - |
| E. coli IFO-15034 | + | ++ | + | - | - |
| S. aureus IFO-13276 | + | + | - | - | - |

Examples B1 to B4

(a) Preparation of joint fillers

For each of Examples B1 to B4, starting materials were mixed together at mixing ratio specified in Table 3. Thus, joint fillers were prepared.

(b) Measurement of water absorption

The preparation of joint bodies and the measurement of the water absorption were carried out in the same manner as in Examples A1 to A3, except that the joint fillers prepared in step (a) described just above were used. The results are shown in Table 4.

(c) Evaluation of antialgal activity

Water was added to each joint filler prepared in step (a), and the mixtures were kneaded to a substantial hardness level of an ear lobe. The kneaded products were molded into molded products having a size of 5 cm x 5 cm square and a thickness of 10 mm. After molding, the molded products were cured under conditions of temperature $20°C$ and humidity 65% for 14 days. Thus, joint bodies 1 were prepared. The joint bodies thus obtained were immersed in a water tank (COD = about 100 ppm), wherein water does not run, disposed outdoors for 15 days to propagate algae on the joint bodies. After immersion for 15 days, the test pieces were lightly shaken under the water to evaluate the level of easiness of the separation of algae. Further, the weight of algae remaining deposited onto the test pieces after the light shaking within the water tank was measured.

Comparative Example B1

The preparation of joint bodies, the measurement of water absorption, and the evaluation of antialgal activity were carried out in the same manner as in Examples B1 to B4, except that, as specified in Table 3, the particulate aggregate and the water repellent were not used in the mixing.

Table 3

| | Ex. B1 | Ex. B2 | Ex. B3 | Ex. B4 | Comp. Ex. B1 |
|---|---|---|---|---|---|
| Mixing ratio | | | | | |
| Portland cement | 50 | 50 | 50 | 50 | 50 |
| Silica stone powder (size: not more than 5 μm) | 10 | 10 | 10 | 10 | |
| Silica sand No. 7 | 20 | 20 | 20 | 20 | 20 |
| Calcium carbonate | 17.3 | 17.3 | 17.3 | 17.3 | 28.8 |
| Water retaining agent | 0.2 | 0.2 | 0.2 | 0.2 | 0.2 |
| Admixture | 1 | 1 | 1 | 1 | 1 |
| Calcium stearate | 0.5 | 0.5 | 0.5 | 0.5 | |
| Photocatalytic titanium oxide | 1 | 2 | 5 | 5 | |
| Tepconazole | | | | 0.5 | |
| Total | 101 | 102 | 105 | 105.5 | 100 |
| Water absorption, % | 4.3 | 4.4 | 4.6 | 4.6 | 23.0 |

Results

After immersion for 15 days, upon light shaking of the test pieces in water, the algae deposited on the joint bodies prepared in Examples B1 to B4 were removed, whereas algae grown on the joint test piece prepared in Comparative Example B1 could not be removed.

The weight of algae remaining deposited even after light shaking of the test piece within the water tank is shown in Table 4.

Table 4

| | Ex. B1 | Ex. B2 | Ex. B3 | Ex. B4 | Comp. Ex. B1 |
|---|---|---|---|---|---|
| Weight of algae, g/25 cm$^2$ | 0.2 | 0.13 | 0.04 | 0.03 | 1.38 |

Example C1

(a) Preparation of joint fillers

Starting materials were mixed together at the following mixing ratio to prepare a joint filler.

Mixing ratio:

| | |
|---|---|
| Portland cement | 50 |
| Silica stone powder | 10 |

**Claims**

1. A cement-based joint body comprising a hydraulic material, a particulate aggregate having a particle diameter of not more than 10 μm, and an antimicrobial/fungicidal agent and/or a photocatalytic metal oxide, wherein said cement-based joint body has a water absorption of not more than 10%.

2. The cement-based joint body according to claim 1, wherein the water absorption is not more than 5%.

3. The cement-based joint body according to claim 2, wherein the water absorption is 1.7 to 5%.

4. The cement-based joint body according to any one of claims 1 to 3, wherein the particle diameter of the particulate aggregate is not more than 5 μm.

5. The cement-based joint body according to any one of claims 1 to 4, wherein the particulate aggregate is at least one member selected from the group consisting of silica stone powder, aluminum hydroxide, silica powder, calcium carbonate, volcanic ash, silica fume, mica, diatomaceous earth, and synthetic resin powder.

6. The cement-based joint body according to any one of claims 1 to 5, wherein the content of the antimicrobial/fungicidal agent is 0.01 to 5.0% by weight.

7. The cement-based joint body according to any one of claims 1 to 6, wherein the antimicrobial/fungicidal agent is at least one member selected from the group consisting of tepconazole, zinc 2-pyridinethiol-1-oxide, 2,4,4'-trichloro-2'-hydroxydiphenyl ether, and 10,10'-oxybisphenoxyarsine.

8. The cement-based joint body according to any one of claims 1 to 7, wherein the content of the photocatalytic metal oxide is 0.01 to 10.0% by weight.

9. The cement-based joint body according to any one of claims 1 to 8, wherein the photocatalytic metal oxide is photocatalytic titanium oxide.

10. The cement-based joint body according to claim 9, wherein the photocatalytic titanium oxide has an anatase crystalline form.

11. The cement-based joint body according to claim 9 or 10, wherein the photocatalytic titanium oxide has, supported thereon, 0.01 to 10% by weight of ions of at least one metal selected from the group consisting of copper, silver, zinc, platinum, iron, and nickel.

12. The cement-based joint body according to any one of claims 1 to 11, which further comprises a water repellent.

13. The cement-based joint body according to claim 12, wherein the content of the water repellent is 0.01 to 10% by weight.

14. The cement-based joint body according to claim 12 or 13, wherein the water repellent is at least one member selected from the group consisting of fatty acids, fatty acid salts, paraffin emulsions, asphalt emulsions, resin emulsions, rubber latexes, water-soluble resins, siliceous compounds, zirconium compounds, and organic silicic acids.

15. The cement-based joint body according to any one of claims 1 to 14, wherein the hydraulic material further comprises a coarse aggregate having a particle diameter of not less than 10 μm.

16. The cement-based joint body according to any one of claims 1 to 15, which further comprises an alkali metal silicate.

17. A cement-based joint filler for use in the production of a joint body, comprising a hydraulic material, a particulate aggregate having a particle diameter of not more than 10 μm, and an antimicrobial/fungicidal agent and/or a photocatalytic metal oxide, and having a water absorption, after hardening, of not more than 10%.

18. The cement-based joint filler according to claim 17, wherein the water absorption is not more than 5%.

19. The cement-based joint filler according to claim 18, wherein the water absorption is 1.7 to 5%.

20. The cement-based joint filler according to any one of claims 17 to 19, wherein the content of the particulate aggregate is 1 to 70% by weight.

21. The cement-based joint filler according to any one of claims 17 to 20, wherein the particle diameter of the particulate aggregate is not more than 5 μm.

22. The cement-based joint filler according to any one of claims 17 to 21, wherein the content of the antimicrobial/fungicidal agent is 0.01 to 5.0% by weight.

23. The cement-based joint filler according to any one of claims 17 to 22, wherein the antimicrobial/fungicidal agent is at least one member selected from the group consisting of tepconazole, zinc 2-pyridinethiol-1-oxide, 2,4,4'-trichloro-2'-hydroxydiphenyl ether, and 10,10'-oxybisphenoxyarsine.

24. The cement-based joint filler according to any one of claims 17 to 23, wherein the content of the photocatalytic metal oxide is 0.01 to 10.0% by weight.

25. The cement-based joint filler according to any one of claims 17 to 24, wherein the photocatalytic metal oxide is photocatalytic titanium oxide.

26. The cement-based joint filler according to claim 25, wherein the photocatalytic titanium oxide has an anatase crystalline form.

27. The cement-based joint filler according to claim 25 or 26, wherein the photocatalytic titanium oxide has, supported thereon, 0.01 to 10% by weight of ions of at least one metal selected from the group consisting of copper, silver, zinc, platinum, iron, and nickel.

28. The cement-based joint filler according to any one of claims 17 to 27, which further comprises a water repellent.

29. The cement-based joint filler according to claim 28, wherein the content of the water repellent is 0.01 to 10% by weight.

30. The cement-based joint filler according to claim 28 or 29, wherein the water repellent is at least one member selected from the group consisting of fatty acids, fatty acid salts, paraffin emulsions, asphalt emulsions, resin emulsions, rubber latexes, water-soluble resins, siliceous compounds, zirconium compounds, and organic silicic acids.

31. The cement-based joint filler according to any one of claims 17 to 30, wherein the hydraulic material further comprises a coarse aggregate having a particle diameter of not less than 10 μm.

32. The cement-based joint filler according to any one of claims 17 to 31, which further comprises an alkali metal silicate.

33. Use of a cement-based joint filler comprising a hydraulic material, a particulate aggregate having a particle diameter of not more than 10 μm, and an antimicrobial/fungicidal agent and/or a photocatalytic metal oxide, for the production of a joint body having a water absorption, after hardening, of not more than 10%.

34. The use according to claim 33, wherein the water absorption is not more than 5%.

35. The use according to claim 34, wherein the water absorption is 1.7 to 5%.

36. A process for producing a cement-based joint body, comprising the steps of: mixing water with a cement-based joint filler comprising a hydraulic material, a particulate aggregate having a particle diameter of not more than 10 μm, and an antimicrobial/fungicidal agent and/or a photocatalytic metal oxide; and then hardening the mixture to produce a hardened product having a water absorption of not more than 10%.

37. The process according to claim 36, wherein the water absorption is not more than 5%.

38. The process according to claim 37, wherein the water absorption is 1.7 to 5%.

(a)          (b)

F I G. 1

<div align="center">

**INTERNATIONAL SEARCH REPORT**

</div>

| | International application No. |
|---|---|
| | PCT/JP00/00657 |

**A. CLASSIFICATION OF SUBJECT MATTER**

Int.Cl$^7$ C04B28/02 C04B20/00 C04B14/06 C04B24/16 C04B14/30
        C04B24/00 C04B24/08 C04B103:65 C04B103:67 C04B111:27

According to International Patent Classification (IPC) or to both national classification and IPC

**B. FIELDS SEARCHED**

Minimum documentation searched (classification system followed by classification symbols)

Int.Cl$^7$ C04B28/00-28/08 C04B20/00 C04B14/06 C04B24/16 C04B14/30
        C04B24/00 C04B24/08 C04B103:65 C04B103:67 C04B111:27

Documentation searched other than minimum documentation to the extent that such documents are included in the fields searched
Jitsuyo Shinan Koho        1926-1996    Toroku Jitsuyo Shinan Koho  1994-2000
Kokai Jitsuyo Shinan Koho  1971-2000    Jitsuyo Shinan Toroku Koho  1996-2000

Electronic data base consulted during the international search (name of data base and, where practicable, search terms used)
        ECLA

**C. DOCUMENTS CONSIDERED TO BE RELEVANT**

| Category* | Citation of document, with indication, where appropriate, of the relevant passages | Relevant to claim No. |
|---|---|---|
| Y | Sakai & Kobayashi hen, "Cement · concrete yo konwa zairyo", Tokyo: Gijutsushoin, 1986, p.402; p.394, Fig.8.2; P.395(3); P.118; p.108, last four lines; p.111③; p.87② | 1-38 |
| Y | JP, 07-314431, A (Kensetsu Kiso Eng. Co., Ltd.), 05 December, 1995 (05.12.95), Claim 1; Par. Nos. 2, 6    (Family: none) | 1-38 |
| Y | JP, 61-021951, A (DENKI KAGAKU KOGYO KABUSHIKI KAISHA, KURIMOTO LTD.), 30 January, 1986 (30.01.86), Claims, pages 1, 2, upper right column, lines 12 to 19; Effects of the Invention ②    (Family: none) | 1-38 |
| Y | JP, 03-126652, A (TAISEI CORPORATION, Shikoku Sogo Kenkyusho K.K.), 29 May, 1991 (29.05.91), Claims, pages 1, 2, upper right column, 2nd line from the bottom to page 2, lower left column, line 8 ; page 3, upper left column, lines 13 to 18; example    (Family: none) | 1-38 |

☒ Further documents are listed in the continuation of Box C.    ☐ See patent family annex.

| | |
|---|---|
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier document but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 09 May, 2000 (09.05.00) | 16 May, 2000 (16.05.00) |

| Name and mailing address of the ISA/ | Authorized officer |
|---|---|
| Japanese Patent Office | |
| Facsimile No. | Telephone No. |

Form PCT/ISA/210 (second sheet) (July 1992)

## INTERNATIONAL SEARCH REPORT

| International application No. |
|---|
| PCT/JP00/00657 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP, 06-321600, A (Chichibu Cement K.K.),<br>22 November, 1994 (22.11.94)   (Family: none) | 1-38 |
| Y | JP, 08-196902, A (Sekisui Chemical Co., Ltd., SEKISUI JUSHI CORPORATION),<br>06 August, 1996 (06.08.96),<br>Claim 1; Par. Nos. 3, 4, 15   (Family: none) | 1-38 |
| Y | JP, 10-066879, A (Bridgestone Corporation),<br>10 March, 1998 (10.03.98),<br>Claims 1, 4; Par. No. 14   (Family: none) | 11,27 |
| Y | JP, 10-314600, A (Hitachi, Ltd.),<br>02 December, 1998 (02.12.98),<br>Claims 1, 2, 7; Par. No. 11   (Family: none) | 11,27 |

Form PCT/ISA/210 (continuation of second sheet) (July 1992)